(19) **Europäisches Patentamt**
**European Patent Office**
**Office européen des brevets**

(11) **EP 2 109 921 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **08707019.9**

(22) Anmeldetag: **14.01.2008**

(51) Int Cl.:
**H01S 3/115** *(2006.01)* **H01S 3/139** *(2006.01)*
**H01S 3/105** *(2006.01)* **H01S 3/13** *(2006.01)*
**H01S 3/10** *(2006.01)*

(86) Internationale Anmeldenummer:
**PCT/EP2008/000214**

(87) Internationale Veröffentlichungsnummer:
**WO 2008/086989 (24.07.2008 Gazette 2008/30)**

(54) **GÜTEGESCHALTETER LASER MIT SEED UND AKTIVER FREQUENZSTABILISIERUNG**

QUALITY-SWITCHED LASER WITH SEED AND ACTIVE FREQUENCY STABILIZATION

LASER DÉCLENCHÉ AVEC AMORÇAGE ET STABILISATION DE FRÉQUENCE ACTIVE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.01.2007 DE 102007003759**

(43) Veröffentlichungstag der Anmeldung:
**21.10.2009 Patentblatt 2009/43**

(73) Patentinhaber: **Fraunhofer-Gesellschaft zur Förderung der angewandten Forschung e.V.
80686 München (DE)**

(72) Erfinder:
- **NICKLAUS, Kolja
  52064 Aachen (DE)**
- **BECKS, Ludger
  52072 Aachen (DE)**
- **WÜHRER, Christian
  85521 Riemerling (DE)**
- **LÖHRING, Jens
  52062 Aachen (DE)**
- **MORASCH, Valentin
  52134 Herzogenrath (DE)**

(74) Vertreter: **Grimm, Ekkehard
Edith-Stein-Strasse 22
63075 Offenbach/Main (DE)**

(56) Entgegenhaltungen:
**US-A- 5 815 250**

- **WULFMEYER V ET AL: "SINGLE-MODE OPERATION OF AN INJECTION-SEEDED ALEXANDRITE RING LASERFOR APPLICATION IN WATER-VAPOR AND TEMPERATURE DIFFERENTIAL ABSORPTION LIDAR" OPTICS LETTERS, OSA, OPTICAL SOCIETY OF AMERICA, WASHINGTON, DC, US, Bd. 21, Nr. 15, 1. August 1996 (1996-08-01), Seiten 1150-1152, XP000622106 ISSN: 0146-9592**
- **HENDERSON S W ET AL: "FAST RESONANCE-DETECTION TECHNIQUE FOR SINGLE-FREQUENCY OPERATION OF INJECTION-SEEDED ND:YAG LASERS" OPTICS LETTERS, OSA, OPTICAL SOCIETY OF AMERICA, WASHINGTON, DC, US, Bd. 11, Nr. 11, 1. November 1986 (1986-11-01), Seiten 715-717, XP000710514 ISSN: 0146-9592 in der Anmeldung erwähnt**
- **WALTHER T ET AL: "GENERATION OF FOURIER-TRANSFORM-LIMITED 35-NS PULSES WITH A RAMP-HOLD-FIRE SEEDING TECHNIQUE IN A TI: SAPPHIRE LASER" APPLIED OPTICS, OSA, OPTICAL SOCIETY OF AMERICA, WASHINGTON, DC, US, Bd. 40, Nr. 18, 20. Juni 2001 (2001-06-20), Seiten 3046-3050, XP001081158 ISSN: 0003-6935 in der Anmeldung erwähnt**
- **CHOI K ET AL: "A Q-SWITCHED ALEXANDRITE LASER INJECTION SEEDED BY A RUBIDIUM ABSORPTION FREQUENCY MATCHED DIODE LASER" OPTICS COMMUNICATIONS, NORTH-HOLLAND PUBLISHING CO. AMSTERDAM, NL, Bd. 88, Nr. 4 , 5 , 6, 1. April 1992 (1992-04-01), Seiten 385-390, XP000261469 ISSN: 0030-4018**

EP 2 109 921 B1

**Beschreibung**

Die vorliegende Erfindung betrifft Verfahren zur Frequenzstabilisierung gütegeschalteter Laser, wobei die Resonatorlänge über mindestens eine halbe Wellenlängen des Lasers variiert wird und das Eintreten der Resonanzbedingung

$$\upsilon = \frac{n*c}{2*L},$$

bezeichnet als Detektionsresonanz, gemessen wird, wobei $\upsilon$ die Mittenfrequenz der longitudinalen Moden, c die Lichtgeschwindigkeit, L die optische Länge des Resonators angeben und n eine ganze Zahl ist, und aufgrund dieser Messung die Impulsauslösung erfolgt.

Schmalbandige gütegeschaltete Laser mit hoher Frequenzstabilität (definiert als die Stabilität der Frequenz bzw. Wellenlänge und der Bandbreite des durch den Laser emittierten Lichtpulses) werden für eine Reihe von Anwendungen, wie z. B. für LIDAR-Systeme zur Wolken- oder Windmessung in der Atmosphäre, benötigt. Typische Anforderungen an die Frequenzstabilität und Bandbreite sind dabei einige MHz. Gütegeschaltete Hochleistunglaser schwingen ohne zusätzliche Maßnahmen aus dem Rauschen heraus an und weisen typische Frequenzstabititäten und Bandbreiten von einigen GHz auf. Dabei setzt sich die Bandbreite aus mehreren longitudinalen Moden zusammen, deren Mittenfrequenz u der Resonanzbedingung

$$\upsilon = \frac{n*c}{2*L}$$

genügt.

Durch Einkoppeln eines schmalbandigen Lasers kleiner Leistung in den Resonator (so genanntes "Seeden") kann das Anschwingen einer ausgewählten longitudinalen Mode des Resonators begünstigt werden, und so kann grundsätzlich die benötigte Schmalbandigkeit des gütegeschalteten Signals erreicht werden.

Um eine hohe Frequenzstabilität zu gewährleisten ist eine hohe Stabilität der Resonatorlänge L erforderlich, da die Mittenfrequenz über die Resonanzbedingung direkt an die Resonatorlänge gekoppelt ist.

In der Praxis wird die Resonatorlänge z. B. durch Ausdehnung der Materialien durch Temperaturschwankungen und mechanische Schwingungen gestört, so dass es ohne weitere Maßnahmen zu einer Schwankung der Mittenfrequenz kommt.

Für langsame Längenänderungen mit einer Frequenz deutlich unterhalb der Pulswiederholrate existieren Verfahren, die z. B. die Pulsaufbauzeit messen [Rahn, Appl. Opt. 24:940(1985)], die bei Erfüllung der Resonanzbedingung minimal ist. Da hierbei die Regelfrequenz auf die Pulsfrequenz begrenzt ist, lassen sich Schwingungen oberhalb der Pulsfrequenz nicht ausregeln:

Bei Störungen bis etwa 1 kHz und moderaten Störamplituden kommen Verfahren zum Einsatz, die die längenabhängige Reflektivität der Kavität für das Seeder-Signal als Regelsignal einsetzen (Fabry-Perot-Eigenschaft der Kavität). Beispiele hierfür sind u. a., Hänsch-Couillaud [Opt. Comm. 35:441-444(1980)] oder Pound-Drever-Hall [Drever et al. Appl. Phys. B 31:97-105 (1983)].

Beim Betrieb z. B. in Fahr- oder Flugzeugen treten u. a. hochfrequente Störungen (> 1 kHz) großer Amplitude auf, die mit den oben genannten Verfahren nicht mehr hinreichend unterdrückt werden können. Hierzu ist ein Regelverfahren notwendig, welches eine Regelfrequenz von einigen 10 kHz aufweist. Darüber hinaus ist eine genaue vorherige Kenntnis der Impulsauslösezeit erforderlich/gewünscht, z. B. um Detektoren rechtzeitig zu triggern.

Bisher wurden zur Lösung des vorstehenden Problems folgende Möglichkeiten vorgeschlagen:

Für die Frequenzstabilisierung in stark gestörten Umgebungen wurde das so genannte Ramp-Fire-Verfahren entwickelt [Henderson et al., Opt. Lett. 11:715-717 (1986)], welches ebenfalls die Fabry-Perot-Eigenschaft des Resonators ausnutzt und "Regelfrequenzen", die aber als der Kehrwert der Zeit zwischen Messung der richtigen Länge und Impulsauslösung zu verstehen sind, von einigen 100 kHz ermöglicht. Mit diesem Verfahren kann eine Frequenzstabilität im MHz-Bereich oder besser erreicht werden, insbesondere auch dann, wenn der Laser großen äußeren Störungen unterworfen wird. Allerdings weist dieses Verfahren den Nachteil auf, dass der genaue Zeitpunkt der Impulsauslösung nicht mehr bzw. nur nach der Detektion der Resonanz und damit nur einzelne $\mu$s vor der Pulsextraktion vorhergesagt werden kann. Die zeitliche Unsicherheit der Impulsauslösung entspricht der Zeit, in der der Resonator aufgrund der Variationen der Resonatorlänge eine Längenänderung von einer halben Wellenlänge verfährt

Mit dem so genannten Ramp-Hold-Fire Verfahren [Walther et al., Appl. Opt. 40, 3046-3050 (2001)] wird zwar eine Vorhersagbarkeit der Impulssauslösung ermöglicht, jedoch sinkt dabei die Regelfrequenz aufgrund des Nachschwingens von Piezoelementen und Mechanik wieder in den Bereich von einzelnen kHz.

Das Dokument V. Wulfmeyer et al: "Single-mode operation of an injection-seeded alexandrite ring laser for application in water-vapor and temperature differential absorption lidar", Optics Letters, OSA, Optical Society of America, Washington, DC, US, Bd. 21, Nr. 15, 1. August 1996 (1996-08-01), Seiten 1150-1152, XP000622106 ISSN: 0146-9592, beschreibt einen Alexandrit-Ringlaser, bei dem durch einen Blitzlampenpuls Phasenänderungen hervorgerufen werden, die wie Änderungen des optischen Pfads wirken.

Aus zeitlich aufeinander folgenden Resonanzen wird eine Prognosezeit für die Auslösung bestimmt zur Erhöhung der Frequenzstabilität.

Das Dokument S.W. Henderson et al: "Fast resonance detection technique for single-frequency operation of injection-seeded ND:YAG lasers" Optics Letters, OSA, Optical Society of America, Washington DC, US, Bd. 11, Nr. 11, 1. November 1986 (1986-11-01), Seiten 715-717, XP000710514 ISSN: 0146-9592 beschreibt das Anlegen einer linearen Spannungsrampe an einen piezoelektrischen Stack. Solche spannungsgesteuen Piezos weisen eine hohe Nichtlinearität in der Bewegung auf. Weiterhin wird nach den Angaben in diesem Dokument ein erster Peak für die Impulsauslösung genutzt, was sich aus der Aussage: "We detected the first of these peaks....and fire the Pockels cell at the peak" ergibt.

Der vorliegenden Erfindung liegt die Aufgabe zugrunde, ein Verfahren der eingangs genannten Art zu schaffen, mit dem eine auf wenige Nanosekunden genaue, zeitlich exakte Vorhersage der Impulsauslösung auch unter dem Einfluss großer Störungen zu erreichen ist. Weiterhin soll eine höchste mit dem Verfahren mögliche Regelfrequenz erreicht werden.

Gelöst wird diese Aufgabe durch ein Verfahren mit den Merkmalen des Anspruchs 1. Vorteilhafte Ausgestaltungen des Verfahrens ergeben sich aus den abhängigen Ansprüchen.

Mit den Maßnahmen nach Anspruch 1 kann eine Regelfrequenz von einigen 10 bis 100 kHz verbunden mit einer auf wenige Nanosekunden genauen Vorhersage der Impulsauslösung ab dem Zeitpunkt der Messung der Detektionsresonanz erreicht werden. Die Erhöhung der Variation der Resonatorlänge, die Nutzung einer Detektionsresonanz und einer Auslöseresonanz, wie dies jeweils vorstehend angegeben ist, bieten in Kombination den Vorteil einer genauen Prognose der Impulsauslösung einige 10 μs vor der Impulsauslösung (und damit etwa eine Größenordnung früher als der Stand der Technik), was für die Ansteuerung weiterer Geräte, wie z. B. einem Empfänger in einem Lidar-Aufbau essentiell notwendig sein kann.

Die Impulsauslösung erfolgt mit/oder nach dem Auftreten der unmittelbar auf die Detektionsresonanz folgenden Resonanz, wodurch die höchste mit dem Verfahren mögliche Regelfrequenz erreicht wird.

Der Impulsauslösezeitpunkt basiert auf einer Messung des zeitlichen Abstands, als Prognosezeit bezeichnet, zwischen zwei Resonanzen; durch diese Maßnahme wird eine zeitlich exakte Vorhersage erreicht, die von höherer Bedeutung als die Frequenzstabilität ist.

In dem Fall, dass der Impulsauslösezeipunkt auf einer Messung des zeitlichen Abstands zwischen zwei Resonanzen basiert, kann die Impulsauslösung entsprechend der Prognosezeit und einer festen, frei einstellbaren Zeit, bezeichnet als Offset-Zeit, erfolgen, wodurch eine Verschiebung der Frequenz des Impulses gegenüber der Frequenz des Seedlasers ermöglicht wird.

Alternativ dazu kann nach Bestimmung der Prognosezeiten des Auftretens der nächsten Resonanzen eine Detektion der nächsten Resonanzen, nämlich der Auslöseresonanzen, erfolgen und die Impulsauslösung kann zu einer dieser Zeiten zuzüglich einer festen, frei einstellbaren Zeit (Offset-Zeit) erfolgen. Diese Möglichkeit sollte dann angewandt werden, wenn eine möglichst hohe Frequenzstabilität von höherer Bedeutung als eine zeitlich exakte Vorhersage der Pulsauslösung ist.

Bei den vorstehend aufgezeigten Möglichkeiten kann während der Variation der Resonatorlänge eine Abfolge mehrere Detektions- und Auslöseresonanzen gemessen werden und eine mehrfache Impulsauslösung erfolgen, wodurch die Auslösung mehrerer Impulse während einer Variation der Resonatorlänge ermöglicht wird.

Die Variation der Resonatorlänge kann entweder durch Vergrößerung der Resonatorlänge oder durch Verkleinerung der Resonatorlänge vorgenommen werden. Es ist auch eine Abfolge mehrerer dieser Veränderungen möglich, das heißt die Variation der Resonator länge kann sich aus mindestens einer Vergrößerung und/ oder mindestens einer Verkleinerung zusammensetzen. Aus Stabilitätsgründen ist es vorteilhaft, die Resonatorlänge, nur zu vergrößern oder zu verkleinern, da der Aktor durch einen Richtungswechsel einen mechanischen Impuls abgeben kann. Durch eine Abfolge von Vergrößerungen und Verkleinerungen der Resonatorlänge, kann der maximal Hub der Längenänderung begrenzt werden. Dies ist besonders bei Mehrfachauslösungen und in hochrepetierenden Systemen vorteilhaft.

Um eine auf Nanosekunden genaue Vorhersage der Impulsauslösung zu erreichen, sollte der Wechsel von Vergrößerung auf Verkleinerung oder Verkleinerung auf Vergrößerung der Resonatorlänge nach jeweils einer Impulsauslösung erfolgen.

Eine bevorzugte Kombination einer Vergrößerung/Verkleinerung der Resonatorlänge sieht vor, dass der Wechsel von Vergrößerung auf Verkleinerung oder Verkleinerung auf Vergrößerung der Resonatorlänge nach jeweils einer Impulsauslösung erfolgt.

Die Frequenzstabilität des Ausgangssignals hängt bei diesem Vorgehen von der genauen Kenntnis des Auftretens der nächsten Resonanzen ab. Um die Prognose und die Frequenzstabilität zu verbessern werden verschiedene Verfahren als alternative oder kombinierte Möglichkeiten eingesetzt, die nachfolgend angegeben sind.

Eine einfache Möglichkeit die Variation der Resonatorlänge vorzunehmen ist durch einen Piezoaktor gegeben. Gerade ein Piezoaktor ermöglicht eine schnelle Änderung der Resonatorlänge über mehrere Wellenlängen innerhalb einiger 10 μs. Hierbei kann die Ansteuerung des Piezoaktors mit einer Stromsteuerung vorgenommen werden; durch eine Stromsteuerung, anstelle einer Spannungssteuerung, des Piezoaktors kann eine Linearisierung der Piezobewegung erreicht werden, da das Auftreten der Hysterese verhindert wird. Eine möglichst lineare Piezobewegung ermöglicht eine Erhöhung der Frequenzstabilität, wenn auf eine Vermessung der realen Piezobewegung verzichtet wird.

Um eine hohe Frequenzstabilität zu erreichen, sollte eine Messung der auftretenden Zeit zwischen Detektions- und Auslöseresonanz erfolgen. Dies kann einmalig vor Betrieb des Lasers geschehen, oder kontinuierlich, damit eine hohe Frequenzstabilität auch unter dem Einfluss von Alterungseffekten, Temperaturänderungen oder der Änderung sonstiger Parameter erhalten werden kann.

Mit den Werten aus den Messungen wird eine Wertetabelle oder eine analytische Beschreibung erstellt, die, in Abhängigkeit des Auftretens der Detektionsresonanz, die Prognosezeit für die Auslöseresonanz bestimmt. Hierbei kann die Wertetabelle oder die analytische Beschreibung auf Basis der kontinuierlichen Vermessung der Zeit zwischen Detektions- und Auslöseresonanz kontinuierlich angepasst werden, so dass die Prognosezeiten fortlaufend aktualisiert und den gegebenen Zuständen angepasst werden; hierdurch kann eine erhöhte Frequenzstabilität erreicht werden.

Eine Änderung der Prognosezeit kann von Impuls zu Impuls auf Basis der gemessenen Zeit zwischen Detektions- und Auslöseresonanz vorgenommen werden, falls eine schnelle Anpassung der Prognosezeit erfolgen soll.

Eine alternative Möglichkeit (langsame Anpassung) hierzu ist diejenige, eine Änderung der Prognosezeit dann vorzunehmen, wenn eine beliebige Anzahl von aufeinander folgenden Messungen der Zeit zwischen Detektions- und Auslöseresonanz eine längere oder kürzere Zeit ergeben. Hierdurch kann bei Systemen, deren Parameter sich nur langsam ändern, eine erhöhte Stabilität und ein geringeres Rauschen der Prognosezeiten erreicht werden. Eine solche Änderung kann um feste Zeiten oder in Abhängigkeit vom Unterschied der Messungen zur vorherigen Prognosezeit vorgenommen werden.

Weitere vorteilhafte, alternative Möglichkeiten können wie folgt angegeben werden.

Die Messung der Zeit zwischen Detektions- und Auslöseresonanz in Abhängigkeit des Auftretens der Detektionsresonanz, wie dies jeweils vorstehend angegeben und erläutert ist, ermöglicht den Verzicht auf eine hochlineare Bewegung des Piezoaktors, wodurch auch eine Spannungssteuerung wieder eingesetzt werden kann und ggf. auftretende Schwingungen aufgrund der Piezobewegung selbst berücksichtigt werden können.

Die kontinuierliche Anpassung der Prognosezeit ermöglicht einen hochstabilen Betrieb auch unter Einflüssen wie einer Änderung der Betriebstemperatur oder Alterung des Piezoaktors oder anderer Komponenten, die zu einer Änderung der Bewegung führen können.

Das erfindungsgemäße Verfahren kann beispielsweise sowohl bei Einzelpulslasern als auch bei Doppelpulslasern angewandt werden. Jeweils ein entsprechendes Beispiel einer vorteilhaften Anordnung hierzu wird nachfolgend angegeben.

1. Einzelpulslaser

Die Anordnung bestehend aus einem Single Frequency Laser (Seeder), der mit einem Faraday-Isolator vom gütegeschalteten Resonator entkoppelt ist und der nach Modenanpassung an den Resonator über einen der Endspiegel oder den Polarisator des mit einer Pokkelszelle gütegeschalteten Resonator eingekoppelt wird und bei dem die Resonanzsignale im vom Resonator reflektierten Anteil der Seedlaserstrahlung am Auskoppelfenster des Faraday-Isolators mit einer Photodiode gemessen werden.

Die gesamte Steuerung der Variation der Resonatorlänge, der Detektion der Resonanzen und die Ansteuerung des Güteschalters (Impulsauslösung) wird durch eine Elektronik gesteuert, die auf den Start des Pumpimpulses synchronisiert wird, das Photodiodensignal als Eingangsignal erhält und als Ausgänge ein Signal im festen Abstand zur Impulslauslösung (Prognosezeit) und das Schaltsignal für den Güteschalter liefert.

Die Variation der Resonatorlänge beträgt bevorzugt das 2-3 fache der Laserwellenlänge und die Bewegung wird langsam beschleunigt und abgebremst, um Schwingungen im Piezoaktor und im Halter des Piezoaktors zu minimieren. Die Geschwindigkeit der Variation der Resonatorlänge ist so gewählt, dass eine Strecke der Länge einer halben Wellenlänge (entspricht dem Abstand von 2 Resonanzen) in etwa einem zehntel bis einem zwanzigstel der Fluoreszenzlebensdauer durchlaufen wird (d. h. bei einem Nd:YAG-Laser eine Zeit von 10-20 $\mu$s).

Die Variation der Resonatorlänge ist hierbei zeitlich so gewählt, dass die Mitte der Variation auf das Ende des Pumpimpulses fällt, so dass zu diesem Zeitpunkt, der den Zeitpunkt der höchsten Lasereffizienz darstellt, eine möglichst lineare Bewegung des Piezoaktors erreicht wird und auch zeitliche Schwankungen zu einem sicheren Auftreten einer Resonanz in zeitlicher Nähe zum Ende des Pumpimpulses führen.

Die Detektion der Resonanzen wird so gestartet, dass die Auslöseresonanz möglichst auf das Ende des Pumpimpulses fällt, d. h. die Detektion startet zu einem Zeitpunkt, der dem 1,5-fachen der Zeitdauer zwischen zwei Resonanzen vor dem Ende des Pumpimpulses entspricht.

2. Doppelpulslaser

Die Anordnung entspricht in ihrem grundsätzlichen Aufbau demjenigen des Einzelpulslasers, allerdings mit dem Unterschied, dass innerhalb einer Variation der Resonatorlänge, die dann typischerweise 4 bis 6 Wellenlängen lang ist, eine zweifache Auslösung der Güteschaltung (Impulsauslösung) stattfindet, so dass ein Laser mit zwei kurz aufeinander folgenden Impulsen entsteht (Doppelpulslaser).

In diesem Fall werden zwei Zeitfenster eingesetzt, in denen jeweils eine Detektions- und eine Auslöseresonanz auftreten und der Güteschalter ausgelöst wird (Impulsauslösung).

Weitere Einzelheiten des erfindungsgemäßen Verfahrens werden nachfolgend in einem Ausführungsbeispiel anhand der Zeichnung beschrieben und insbesondere im Vergleich zu der ebenfalls dargestellten Anordnung nach dem Stand der Technik ersichtlich.

In der Zeichnung zeigt

Figur 1   eine schematische Darstellung mit einem gütegeschalteten Laser, um das erfindungsgemäße Verfahren zu erläutern,

Figur 2   eine Anordnung, die den Stand der Technik darstellt, um zu erläutern, wie die Frequenzstabilisierung gütegeschalteter Laser nach dem Stand der Technik vorgenommen wird, und

Figur 3   eine schematische Darstellung, um die allgemeine Regelung zufälliger Ände- rungen der Resonatorlänge, beispielsweise durch Temperaturänderungen oder Vibrationen, zu erläutern.

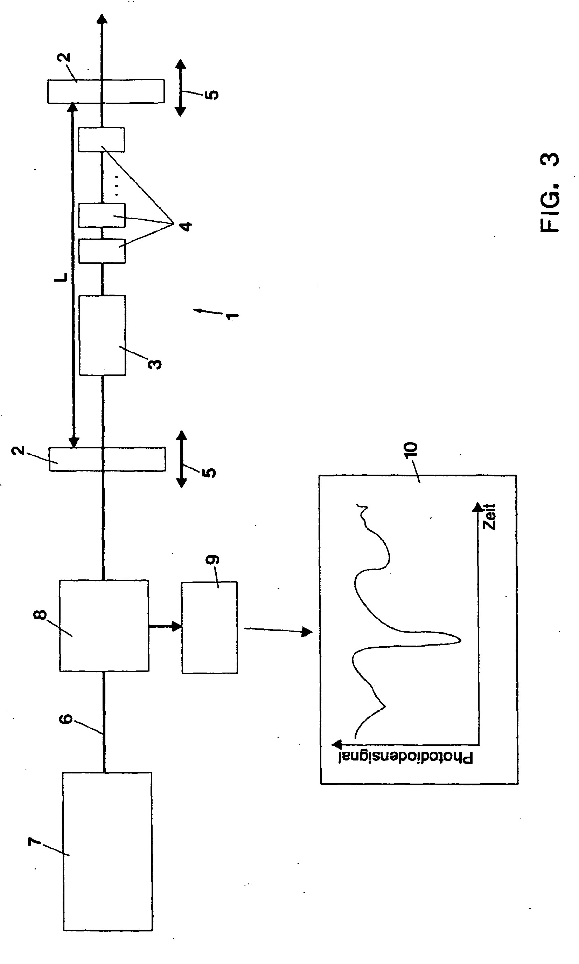

In Figur 3 ist schematisch ein schmalbandiger, gütegeschalteter Laser 1 mit zwei Resonatorspiegeln 2, einem Güteschalter 3 sowie weiteren Elementen, die allgemein mit dem Bezugszeichen 4 bezeichnet sind, dargestellt. Der Abstand der beiden Spiegel 2 zueinander, die Resonatorlänge, ist mit "L" angegeben. Wie durch die beiden Doppelpfeile 5 angedeutet ist, unterliegen die beiden Spiegel Störungen, was sich in Schwankungen der Resonatorlänge L widerspiegelt. Diese Längenänderungen haben einen Einfluss auf die Mittenfrequenz der longitudinalen Moden, was sich unmittelbar aus der Resonanzbedingung

$$\upsilon = \frac{n * c}{2 * L}$$

ergibt, wobei c die Lichtgeschwindigkeit und n eine ganze Zahl angeben. Entsprechend der Darstellung der Figur 3 wird die Strahlung 6 eines frequenzstabilisierten Lasers (Seeders) 7 kleiner Leistung über einen optischen Isolator 8 eingekoppelt, um dadurch das Anschwingen einer ausgewählten longitudinalen, Mode des Resonators des Lasers 1 zu begünstigen und eine geforderte Schmalbandigkeit des gütegeschalteten Signals zu erreichen.

Über den optischen Isolator 8 kann die Zeitabhängigkeit eines Photodiodensignals mittels eines Detektors 9 erfasst werden, wie dies anhand des diagramms 10 dargestellt ist. Dieses Diagramm verdeutlicht anhand eines schematisch dargestellten Signals am Detektor, dass ohne aktive Regelung der Resonatorlänge eine zufällige Längenänderung (z. B. aufgrund von Temperaturschwankungen oder Vibrationen) auftritt Es muss daher eine aktive Regelung der Resonatorlänge erfolgen um eine hohe Frequenzstabilität zu erreichen.

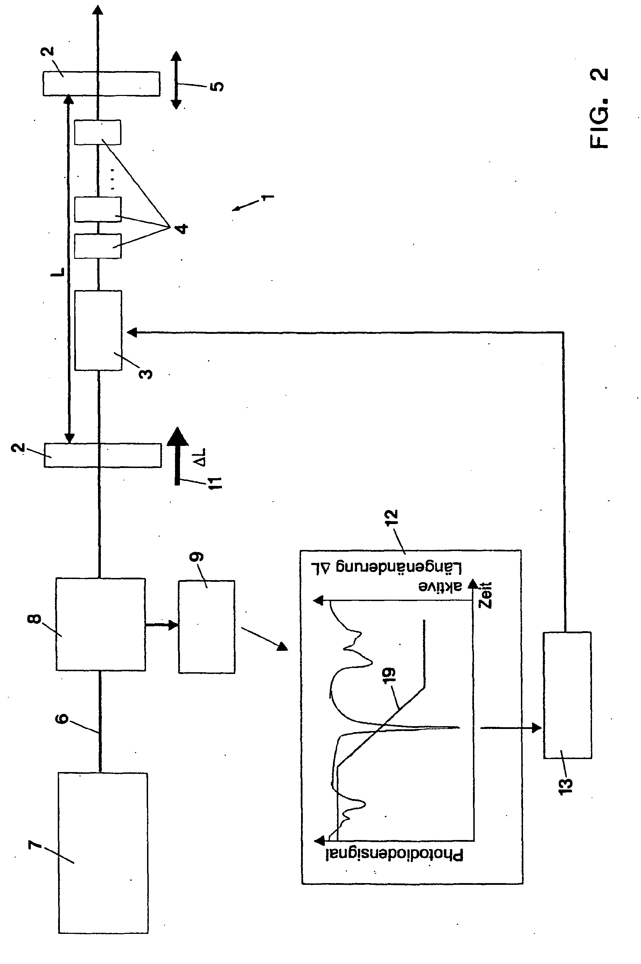

Um diese Frequenzstabilisierung zu erreichen, wurde nach dem Stand der Technik, wie er in Figur 2 dargestellt ist, eine gezielte Änderung der Resonatorlänge L, d. h. des Abstands zwischen den beiden Resonatorspiegeln 2, um ΔL durch aktives Verschieben eines der Resonatorspiegel 2 vorgenommen, wie dies durch den Pfeil 11, der dem linken Resonatorspiegel 2 in Figur 2 zugeordnet ist, dargestellt ist.

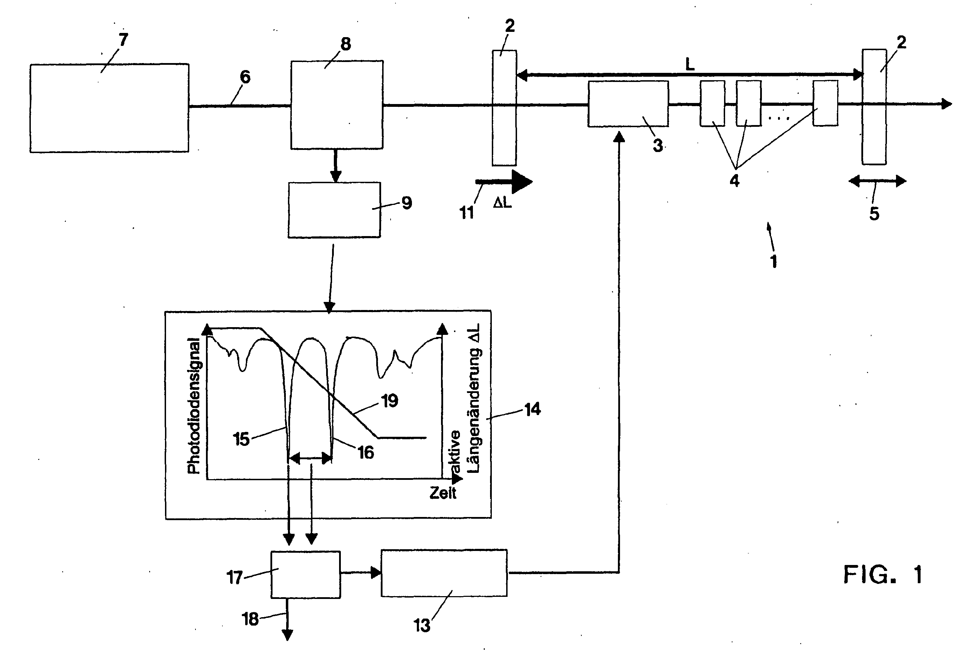

Es sollte an dieser Stelle darauf hingewiesen werden, dass, insoweit in den einzelnen Figuren 1 bis 3 identische oder vergleichbare Bauteile gezeigt sind, diese durch die verschiedenen Figuren hinweg mit entsprechenden Bezugszeichen bezeichnet sind.

Wie anhand des Diagramms 12 in Figur 2 zu erkennen ist, wird über den optischen Isolator 8 und den Detektor 9 das aufgrund der aktiven Längenänderung ΔL (Veränderung des Abstands zwischen den beiden Resonatorspiegeln 2) auftretende Signalminimum, welches bei Eintreffen der Resonanzbedingung auftritt, erfasst und der Zeitpunkt der Resonanz bestimmt und daraufhin der Güteschalter 3 über einen Treiber 13 angesteuert, um die Impulsaussendung auszulösen. Allerdings ist es mit einer solchen Messung nicht, bzw. nur minimal vor der Pulsaussendung, möglich, eine Aussage über den genauen Zeitpunkt der Pulsauslösung zu treffen, da der Zeitpunkt der Pulsauslösung von Puls zu Puls um bis zu der Zeit schwankt, in der die Resonatorlänge um eine halbe Wellenlänge variiert wird.

Aus diesem Grund wird bei dem erfindungsgemäßen Verfahren eine Vorgehensweise eingeschlagen, wie sie in Figur 1 dargestellt ist. Die aufgrund einer gezielten Änderung ΔL der Resonatorlänge L, beispielsweise durch Verschieben wiederum des einen Resonatorspiegels 2, auftretende Resonanz wird erfasst (Detektionsresonanz) und das Auftreten einer weiteren Resonanz (Auslöseresonanz) aufgrund einer Prognosezeit wird vorhergesagt, wobei die Prognosezeit durch eine vorherige Messung erhalten wurde. Dies ist anhand des Diagramms 14 dargestellt, in dem der Peak, der der Detektionsresonanz zugeordnet ist, mit dem Bezugszeichen 15 bezeichnet ist, während der der Auslöseresonanz zugeordnete Peak mit dem Bezugszeichen 16 bezeichnet ist. Folglich wird die Messung der Detektionsresonanz (Peak 15) und die Kenntnis des Auftretens des Zeitpunkts der Auslöseresonanz (Peak 16) dazu genutzt, über eine Verzögerungseinheit 17 und einen Treiber 13 den Güteschalter 3 für eine Impulsauslösung anzusteuern. Mit dem Ausgangspfeil 18 an der Verzögerungseinheit 17 ist die Ausgabezeit der Prognose der nächsten Resonanz angegeben, die z. B. zum Triggern eines Detektors bei einem LIDAR-System zur Wolken- und Windmessung in der Atmosphäre verwendet wird.

Die Rampen-Linie 19 in den Figuren 1 bis 3, die in den jeweiligen Diagrammen 10, 12 und 14 eingezeichnet ist, zeigt schematisch die Änderung der Resonatorlänge, die z. B. durch das Verschieben eines Endspiegels erfolgt.

**Patentansprüche**

1. Verfahren zur Frequenzstabilisierung gütegeschalteter Laser, bei dem die optische Länge des Resonators über mindestens zwei halbe Wellenlängen des Lasers variiert wird und das Eintreten der Resonanzbedingung

$$\upsilon = \frac{n * c}{2 * L},$$

bezeichnet als Detektionsresonanz, gemessen wird, wobei υ die Mittenfrequenz der longitudinalen Moden, c die Lichtgeschwindigkeit, L die optische Länge des Resonators angeben und n eine ganze Zahl ist, und aufgrund dieser Messung die Impulsauslösung mit oder nach dem Zeitpunkt des Auftretens der unmittelbar auf die Detektionsresonanz folgenden Resonanz, bezeichnet als Auslöseresonanz, entsprechend der Resonanzbedingung erfolgt, wobei der Impulsauslösezeitpunkt auf einer Messung des zeitlichen Abstands, als Prognosezeit bezeichnet, zwischen zwei Resonanzen basiert und die Impulsauslösung entsprechend der Prognosezeit und einer festen, frei einstellbaren Zeit, bezeichnet als Offset-Zeit, erfolgt,
wobei die Zeit zwischen Detektions- und Auslöseresonanz auf einer kontinuierlichen Messung basiert und mit den Werten aus diesen Messungen eine Wertetabelle oder eine analytische Beschreibung erstellt wird, die dann in Abhängigkeit des Auftretens der Detektionsresonanz diese Prognosezeit für die Auslöseresonanz bestimmt.

2. Verfahren nach Anspruch 1, **dadurch gekennzeichnet, dass** nach Bestimmung der Prognosezeiten des Auftretens der nächsten Resonanzen eine Detektion der nächsten Resonanzen, nämlich der Auslöseresonanzen, erfolgt und dass die Impulsauslösung zu einer dieser Zeiten zuzüglich einer festen, frei einstellbaren Zeit (Offset-Zeit) erfolgt.

3. Verfahren nach Anspruch 2, **dadurch gekennzeichnet, dass** während der Variation der optischen Resonatorlänge eine Abfolge mehrerer Detektions- und Auslöseresonanzen gemessen wird und eine mehrfache Impulsauslösung erfolgt.

4. Verfahren nach einem der Ansprüche 1 bis 3, **dadurch gekennzeichnet, dass** die Variation der optischen Resonatorlänge mindestens eine Vergrößerung und/oder mindestens eine Verkleinerung der Resonatorlänge umfasst.

5. Verfahren nach Anspruch 4, **dadurch gekennzeichnet, dass** der Wechsel von Vergrößerung auf Verkleinerung oder Verkleinerung auf Vergrößerung der optischen Resonatorlänge nach einer Impulsauslösung erfolgt.

6. Verfahren nach einem der Ansprüche 1 bis 5, **dadurch gekennzeichnet, dass** die Variation der optischen Resonatorlänge durch einen Piezoaktor vorgenommen wird, wobei die Ansteuerung des Piezoaktors insbesondere mit einer Stromsteuerung vorgenommen wird.

7. Verfahren nach einem der Ansprüche 1 bis 6, **dadurch gekennzeichnet, dass** eine vorherige Messung der auftretenden Zeit zwischen Detektions- und Auslöseresonanz erfolgt.

8. Verfahren nach einem der Ansprüche 1 bis 7, **dadurch gekennzeichnet, dass** die Wertetabelle oder analytische Beschreibung auf Basis der kontinuierlichen Vermessung der Zeit zwischen Detektions- und Auslöseresonanz kontinuierlich angepasst wird.

9. Verfahren nach Anspruch 8, **dadurch gekennzeichnet, dass** eine Änderung der Prognosezeit von Impuls zu Impuls auf Basis der gemessenen Zeit zwischen Detektions- und Auslöseresonanz vorgenommen wird.

10. Verfahren nach Anspruch 9, **dadurch gekennzeichnet, dass** eine Änderung der Prognosezeit, wenn eine beliebige Anzahl von aufeinander folgenden Messungen der Zeit zwischen Detektions- und Auslöseresonanz eine längere oder kürzere Zeit ergeben, vorgenommen wird.

**Claims**

1. A method for the frequency stabilization of quality-switched lasers, in which the optical length of the resonator is varied over at least two half wavelengths of the laser, and the occurrence of the resonance condition

$$\nu = \frac{n * c}{2 * L},$$

called detection resonance, is measured, wherein ν is the mean frequency of the longitudinal modes, c is the speed of light, L is the optical length of the resonator, and n is an integer, and pulse triggering takes place on the basis of said measurement with or after the time of the occurrence of the resonance directly following the detection resonance, called trigger resonance, according to the resonance condition, wherein the pulse trigger time is based on a measurement of the time interval, called prediction time, between two resonances and pulse triggering takes place according to the prediction time and a fixed, freely adjustable time, called offset time, wherein the time between detection and trigger resonance is based on a continuous measurement and, with the values from said measurements, a table of values or an analytical description is drawn up that will then define said prediction time for the trigger resonance in response to the occurrence of the detection resonance.

2. The method according to claim 1, **characterized in that** after determination of the prediction times of the occurrence of the next resonances a detection of the next resonances, namely of the trigger resonances, takes place and that pulse triggering takes place at one of said times plus a fixed, freely adjustable time (offset time).

3. The method according to claim 2, **characterized in that** during variation of the optical resonator length a sequence of plural detection and trigger resonances is measured and multiple pulse triggering takes place.

4. The method according to any one of claims 1 to 3, **characterized in that** the variation of the optical resonator length comprises at least an increase and/or at least a decrease in the resonator length.

5. The method according to claim 4, **characterized in that** the change from increase to decrease or decrease to increase in the optical resonator length takes place after pulse triggering.

6. The method according to any one of claims 1 to 5, **characterized in that** the variation of the optical resonator length is carried out by means of a piezo actuator, the piezo actuator being controlled particularly by current control.

7. The method according to any one of claims 1 to 6, **characterized in that** a previous measurement of the time occurring between detection and trigger resonance takes place.

8. The method according to any one of claims 1 to 7, **characterized in that** the table of values or analytical description is continuously adapted on the basis of the continuous measurement of the time between detection and trigger resonance.

9. The method according to claim 8, **characterized in that** a change in the prediction time is made from pulse to pulse on the basis of the time measured between detection and trigger resonance.

10. The method according to claim 9, **characterized in that** a change in the prediction time is made when a discretionary number of successive measurements of the time between detection and trigger resonance shows a longer or shorter time.

## Revendications

1. Procédé pour la stabilisation de fréquence de laser déclenché, où la longueur optique du résonateur est variable par au moins deux demi-longueurs d'onde du laser et la survenance de la condition de résonance

$$\upsilon = \frac{n * c}{2 * L}$$

désignée en tant que résonance de détection, étant mesurée, u indiquant la fréquence centrale des modes longitudinaux, c la vitesse de la lumière, L la longueur optique du résonateur et n étant un nombre entier et sur la base de cette mesure la résolution d'impulsion s'effectuant avec ou après le moment de la survenance de la résonance suivant directement la résonance de détection désignée comme résonance de déclenchement, en fonction de la condition de résonance, le moment de déclenchement d'impulsion étant basé sur une mesure de la distance temporelle désignée en tant que temps de pronostic entre deux résonances et le déclenchement d'impulsion s'effectuant en fonction du temps de pronostic et un temps fixe librement réglable désigné comme temps offset (décalage),
le temps entre la résonance de détection et de déclenchement étant basé sur une mesure continue et une description analytique ou un tableau de valeur étant établi avec les valeurs issues de ces mesures, description qui détermine ensuite en fonction de la survenance de la résonance de détection ce temps de pronostic pour la résonance de déclenchement.

2. Procédé selon la revendication 1, **caractérisé en ce qu'**après la détermination des temps de pronostic de la survenance des résonances suivantes, il est effectué une détection des résonances suivantes, notamment des résonances de déclenchement et **en ce que** le déclenchement d'impulsion s'effectue à l'un de ces temps en supplément d'un temps fixe librement réglable (temps offset).

**3.** Procédé selon la revendication 2, **caractérisé en ce que** pendant la variation de la longueur optique de résonance, il est mesuré une succession de plusieurs résonances de détection et de déclenchement et un déclenchement multiple d'impulsions s'effectue.

**4.** Procédé selon l'une des revendications 1 à 3, **caractérisé en ce que** la variation de la longueur optique de résonance comprend au moins un agrandissement et/ou au moins une réduction de la longueur de résonance.

**5.** Procédé selon la revendication 4, **caractérisé en ce que** le passage de l'agrandissement à la réduction ou de la réduction à l'agrandissement de la longueur optique de résonance s'effectue après un déclenchement d'impulsion.

**6.** Procédé selon l'une des revendications 1 à 5, **caractérisé en ce que** la variation de la longueur optique de résonance est effectuée par un actionneur piézoélectrique, la commande de l'actionneur piézoélectrique étant effectuée en particulier par une commande de courant.

**7.** Procédé selon l'une des revendications 1 à 6, **caractérisé en ce qu'**il est effectué une mesure précédente du temps survenant entre la résonance de détection et la résonance de déclenchement.

**8.** Procédé selon l'une des revendications 1 à 7, **caractérisé en ce que** le tableau de valeur ou la description analytique est adapté en continu sur la base de la mesure continue du temps entre la résonance de détection et de déclenchement.

**9.** Procédé selon la revendication 8, **caractérisé en ce qu'**une modification du temps de pronostic d'impulsion en impulsion est effectuée sur la base du temps mesuré entre la résonance de détection et de déclenchement.

**10.** Procédé selon la revendication 9, **caractérisé en ce qu'**une modification du temps de pronostic est effectuée si un nombre quelconque de mesures successives du temps entre la résonance de détection et de déclenchement donne un temps plus long ou plus court.

FIG. 1

FIG. 2

Photodiodensignal

Zeit

aktive Längenänderung ΔL

EP 2 109 921 B1

FIG. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Rahn.** *Appl. Opt.,* 1985, vol. 24, 940
- *Opt. Comm.,* 1980, vol. 35, 441-444
- **Drever et al.** *Appl. Phys. B,* 1983, vol. 31, 97-105
- **Henderson et al.** *Opt. Lett.,* 1986, vol. 11, 715-717
- **Walther et al.** *Appl. Opt.,* 2001, vol. 40, 3046-3050

- Single-mode operation of an injection-seeded alexandrite ring laser for application in water-vapor and temperature differential absorption lidar. **V. Wulfmeyer et al.** Optics Letters. Optical Society of America, 01. August 1996, vol. 21, 1150-1152
- Fast resonance detection technique for single-frequency operation of injection-seeded ND:YAG lasers. **S.W. Henderson et al.** Optics Letters. Optical Society of America, 01. November 1986, vol. 11, 715-717